# FASCICULE DE BREVET EUROPEEN

(11) **EP 2 991 853 B1**
(45) Date de publication et mention de la délivrance du brevet: **16.01.2019**
(21) Numéro de dépôt: 14726705.8
(22) Date de dépôt: 28.04.2014
(51) Int. Cl.: B60L 11/18, H01M 10/613, H01M 10/625, H01M 10/633

(54) **PROCÉDÉ DE GESTION DU REFROIDISSEMENT D'UNE BATTERIE À SEUILS DE REFROIDISSEMENT AJUSTABLES**
VERFAHREN ZUR KÜHLUNG EINER BATTERIE MIT EINSTELLBAREN KÜHLUNGSSCHWELLWERTEN
METHOD FOR MANAGING THE COOLING OF A BATTERY WITH ADJUSTABLE COOLING THRESHOLDS

(30) Priorité: 02.05.2013 FR 1354056
(43) Date de publication de la demande: 09.03.2016
(73) Titulaire: Renault S.A.S., 92100 Boulogne-Billancourt (FR)
(72) Inventeur: MARCHAL, Caroline, F-78180 Montigny le Bretonneux (FR); RECOUVREUR, Philippe, F-92120 Montrouge (FR)
(86) Numéro de dépôt international: PCT/FR2014/051015
(87) Numéro de publication internationale: WO 2014/177800

(56) Documents cités:
- EP-A1- 1 876 051
- WO-A2-2012/079983
- US-A1- 2010 304 193

## Description

### Domaine technique de l'invention

L'invention concerne le domaine de la gestion des batteries devant être refroidies.

L'invention a pour objet plus particulièrement un procédé de gestion d'une batterie, de préférence disposée dans un véhicule automobile.

Un autre objet de l'invention est un véhicule mettant en oeuvre le procédé de gestion.

### État de la technique

Dans un véhicule totalement électrique, ou hybride combinant des modes de propulsion par moteur électrique et par moteur à combustion interne, une batterie est utilisée pour assurer des fonctions de propulsion du véhicule. La technologie d'une telle batterie implique qu'elle doit fonctionner dans une plage de températures donnée pour limiter sa dégradation.

Le document WO2012/003209 décrit un tel fonctionnement en développant des moyens particuliers pour maintenir la batterie entre 18°C et 45°C lors de son fonctionnement pour éviter une dégradation trop rapide.

Le document WO 2012/079983 A2 décrit un procédé de contrôle de la température d'une batterie d'un véhicule.

Il a ainsi été observé en atelier des dégradations différentes de batteries utilisées selon ce type de fonctionnement.

### Objet de l'invention

Le but de la présente invention est de proposer une solution qui permet de limiter les dégradations d'une batterie au cours de sa vie.

On tend vers ce but notamment grâce à un procédé de gestion d'une batterie, notamment disposée dans un véhicule automobile, ledit procédé comportant :
- une étape de refroidissement de la batterie lorsqu'une donnée représentative de la température de la batterie dépasse un premier seuil,
- une étape d'arrêt du refroidissement de la batterie lorsque la donnée représentative de la température de la batterie passe en dessous d'un deuxième seuil, notamment inférieur au premier seuil,
- une étape d'ajustement (E3) d'au moins l'un des premier et deuxième seuils,
- une étape de détermination (E4) d'une perte de capacité réelle de la batterie, l'étape d'ajustement d'au moins l'un des premier et deuxième seuils étant fonction de ladite perte de capacité réelle de la batterie.

Avantageusement, l'étape d'ajustement d'au moins l'un des premier et deuxième seuils comporte une étape de détermination d'un comportement de conduite choisi parmi un premier type de conduite et un deuxième type de conduite sollicitant plus la batterie que le premier type de conduite, notamment par comparaison d'au moins un seuil de conduite prédéterminé à au moins une information de conduite. De préférence, le comportement de conduite déterminé étant du deuxième type de conduite, le premier seuil et/ou le deuxième seuil sont abaissés par l'étape d'ajustement. Par ailleurs, préférentiellement, le comportement de conduite déterminé étant du premier type de conduite, les premier et/ou deuxième seuils sont ajustés à la hausse par l'étape d'ajustement de sorte à diminuer la dépense d'énergie du véhicule.

De manière préférentielle, l'étape d'ajustement d'au moins l'un des premier et deuxième seuils comporte une étape de détermination d'un état de la batterie, notamment son âge ou son état de santé.

Par exemple, l'étape d'ajustement comporte l'interrogation d'une table dont une entrée est l'état déterminé de la batterie, ladite table donnant en sortie un nouveau premier seuil à utiliser dans l'étape de refroidissement et/ou un nouveau deuxième seuil à utiliser dans l'étape d'arrêt du refroidissement.

Selon l'invention, le procédé comporte une étape de détermination d'une perte de capacité réelle de la batterie, l'étape d'ajustement d'au moins l'un des premier et deuxième seuils étant fonction de ladite perte de capacité réelle de la batterie. Il faut noter que, dans la présente demande, la capacité réelle de la batterie et son état de charge sont deux choses bien distinctes, la capacité étant la charge électrique que peut fournir la batterie après un cycle complet de décharge à partir d'un état de charge maximum.

Par exemple, le procédé comporte une étape de détermination d'une perte de capacité théorique de la batterie, l'étape d'ajustement d'au moins l'un des premier et deuxième seuils prenant en compte ladite perte de capacité théorique.

Selon une réalisation, la batterie ayant une durée de vie garantie déterminée par des conditions théoriques d'utilisation de la batterie, l'étape d'ajustement comporte une étape de comparaison de la perte de capacité réelle déterminée et de la perte de capacité théorique déterminée de sorte que l'ajustement d'au moins l'un des premier et deuxième seuils permette d'assurer la durée de vie garantie.

Avantageusement, le procédé comporte un cycle au cours duquel :
- il est réalisé une étape d'apprentissage, au cours d'une plage temporelle associée au cycle, du comportement de la batterie en fonction de son état de charge et de sa température,
- à la fin de la plage temporelle une perte de capacité réelle de la batterie est déterminée à partir des résultats de l'étape d'apprentissage,
- l'étape d'ajustement d'au moins l'un des premier et deuxième seuils comprend l'établissement d'un correctif à appliquer audit d'au moins un des premier et deuxième seuils en prenant en compte au moins la perte de capacité réelle déterminée de la batterie.

De préférence, le correctif à appliquer dépend d'une comparaison entre la perte de capacité théorique déterminée et la perte de capacité réelle déterminée.

Par ailleurs, le processus est itératif tout au long de la durée de vie de la batterie de sorte que chaque fin de cycle entraine l'ajustement de l'au moins un des premier et deuxième seuils pour le cycle suivant.

Selon une mise en oeuvre particulière, l'étape d'apprentissage comprend la construction d'un ensemble de paramètres, chaque paramètre comprenant une première information relative à un ou plusieurs états de charge, notamment une plage d'états de charge, une deuxième information relative à une ou plusieurs températures, notamment une plage de températures, et une troisième information temporelle, notamment un pourcentage, représentative du temps dans lequel la batterie a fonctionné selon la première information et la deuxième information au cours de la plage temporelle, et à la fin de la plage temporelle il est appliqué à chacune des troisièmes informations un coefficient de dégradation correspondant de sorte à déterminer la perte de capacité réelle de la batterie.

L'invention est aussi relative à un véhicule automobile comprenant une batterie, au moins un capteur ou observateur de température configuré de sorte à mesurer une valeur représentative de la température de la batterie, un système de refroidissement de la batterie et un système de calcul relié au capteur de température, au système de refroidissement et comprenant les moyens logiciels et/ou matériels de mise en oeuvre du procédé de gestion tel que décrit.

L'invention est aussi relative à un support d'enregistrement de données lisible par un calculateur, sur lequel est enregistré un programme informatique comprenant des moyens de codes de programme informatique de mise en oeuvre du procédé tel que décrit.

L'invention est aussi relative à un programme informatique comprenant un moyen de codes de programme informatique adapté à la réalisation du procédé tel que décrit, lorsque le programme est exécuté par un calculateur.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre différentes étapes de mise en oeuvre d'un procédé de gestion d'une batterie,
- la figure 2 représente schématiquement un véhicule équipé de moyens aptes à mettre en oeuvre le procédé de gestion,
- la figure 3 représente une matrice dont chaque case correspond à une intersection entre une plage d'états de charge SOC en pourcentage et une plage de températures, chaque case étant associée à un pourcentage représentatif d'une information temporelle,
- la figure 4 illustre une matrice de dégradation dont chaque case correspond à une intersection entre une plage d'états de charge SOC en pourcentage et une plage de températures, chaque case étant associée à un coefficient de dégradation d'une batterie,
- la figure 5 illustre une courbe représentative de la capacité d'une batterie en fonction du temps (notamment au cours de sa durée de vie),
- la figure 6 illustre un mode de réalisation particulier d'un cycle du procédé de gestion.

### Description de modes préférentiels de l'invention

Le procédé décrit ci-après diffère de l'art antérieur notamment en ce qu'un seuil de température associé à la logique de refroidissement de la batterie est adapté au cours de la vie de ladite batterie. En fait, des études réalisées dans le cadre de la présente invention ont démontré qu'en fonction de l'utilisation de la batterie, et donc de son vieillissement, la logique de refroidissement doit être adaptée si l'on veut limiter la dégradation de cette dernière.

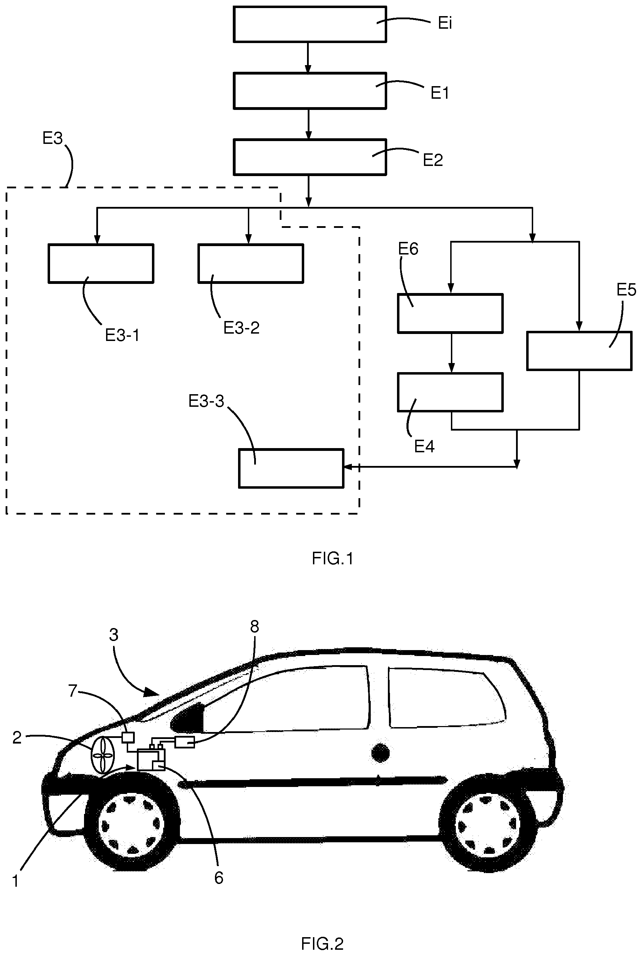

La figure 1 illustre des étapes d'un procédé de gestion d'une batterie 1, de préférence disposée dans un véhicule automobile 3, et notamment, comme illustré à la figure 2, associée à un système de refroidissement 2. La batterie 1 peut fournir de l'énergie à un véhicule automobile 3. En fait, la batterie 1 peut être une batterie de propulsion du véhicule 3. La propulsion s'entend dans le sens de la mise en mouvement du véhicule, la batterie peut alors transmettre du couple au train avant 4 et/ou au train arrière 5 du véhicule automobile 3.

Bien que le présent procédé soit tout particulièrement adapté dans le cadre d'une batterie 1 de véhicule automobile 3 tout électrique ou hybride, il peut être adapté à tout type de batterie devant être refroidie à un moment donné lors de son utilisation/fonctionnement.

Le procédé comporte une étape de refroidissement E1 de la batterie 1 lorsqu'une donnée représentative de la température de la batterie 1 dépasse un premier seuil notamment de température et une étape d'arrêt du refroidissement E2 de la batterie 1 lorsque la donnée représentative de la température de la batterie 1 passe en dessous d'un deuxième seuil, notamment de température. Ce deuxième seuil est, de préférence, inférieur au premier seuil. L'étape de refroidissement E1 peut être mise en oeuvre par la mise en route du système de refroidissement 2, et l'étape d'arrêt du refroidissement peut être mise en oeuvre par l'arrêt du système de refroidissement 2.

La donnée représentative de la température de la batterie 1 peut être issue d'une étape de mesure de la température de la batterie 1, par exemple par un capteur de température 6 placé de manière idoine au niveau de la batterie 1.

En outre, le procédé comporte une étape d'ajustement E3 d'au moins l'un des premier et deuxième seuils. La notion d'ajustement s'entend comme une modification appliquée à un premier seuil courant et/ou à un deuxième seuil courant de sorte à adapter le procédé de gestion de la batterie 1. Par exemple, le procédé de gestion de la batterie peut comporter une étape d'initialisation Ei dans laquelle les premier et deuxième seuils sont initialisés, notamment à des valeurs par exemple déterminées par le constructeur de la batterie 1. Ces valeurs initialisées peuvent être utilisées une ou plusieurs fois lors de la mise en oeuvre des étapes E1 et E2 avant que l'étape d'ajustement E3 soit réalisée. Autrement dit, de manière générale, au moins une étape de refroidissement E1 et au moins une étape d'arrêt du refroidissement E2 peuvent être mises en oeuvre avant de réaliser l'étape d'ajustement E3. Ces étapes E1 et E2 peuvent être réalisée par exemple au cours d'une phase de roulage du véhicule, les premier et deuxième seuils pouvant alors être ajustés de sorte que le comportement du refroidissement soit différent au sein d'une même phase de roulage ou entre deux phases de roulage différentes espacées temporellement, par exemple espacées par une phase de parking du véhicule. Au cours d'une phase de roulage, la batterie 1 est sollicitée pour fournir du courant, par exemple à un organe de propulsion 8 du véhicule, ou est rechargée de manière connue de l'homme du métier, en utilisant par exemple des actionneurs du véhicule tel qu'un système de freinage.

En fait, l'étape d'ajustement E3 d'au moins l'un des premier et deuxième seuils prend en compte la dynamique de vieillissement de la batterie 1 (autrement dit, de manière plus simple une utilisation de la batterie 1) par l'intermédiaire de sa perte de capacité. Autrement dit, l'étape d'ajustement E3, en prenant en compte la perte de capacité de la batterie, prend en compte au moins une donnée permettant d'évaluer un vieillissement de la batterie 1. Autrement dit, l'étape d'ajustement E3 d'au moins l'un des premier et deuxième seuils dépend de données relatives au vieillissement de la batterie 1.

Selon un premier mode de réalisation, l'étape d'ajustement E3 comporte une étape de détermination E3-1 d'un comportement de conduite choisi parmi un premier type de conduite et un deuxième type de conduite sollicitant plus la batterie 1 que le premier type de conduite, notamment par comparaison d'au moins un seuil de conduite prédéterminé à au moins une information de conduite, comme par exemple la vitesse moyenne du véhicule sur une plage temporelle donnée. On comprend alors que l'étape d'ajustement E3 d'au moins l'un des premier et deuxième seuils prend en compte le comportement de conduite déterminé. Par exemple, si le comportement de conduite déterminé est du deuxième type de conduite, le premier seuil et/ou le deuxième seuil sont abaissés par l'étape d'ajustement E3 de sorte à déclencher plus tôt le refroidissement et à l'arrêter plus tard. Selon un autre exemple, si le comportement de conduite déterminé est du premier type de conduite, les premier et/ou deuxième seuils sont ajustés à la hausse par l'étape d'ajustement E3 de sorte à diminuer la dépense d'énergie du véhicule, ou ne sont pas modifiés (au détriment de l'autonomie du véhicule). Ce premier mode de réalisation se base sur le fait qu'en fonction du type de conduite, le vieillissement de la batterie 1 du véhicule 3 pourra être accéléré, dès lors le ou les seuils pourront être ajustés de sorte à limiter au mieux le vieillissement de la batterie 1. Typiquement, le premier type de conduite est associé à un vieillissement de la batterie 1 ralenti en comparaison à un troisième type de conduite représentatif d'une conduite étalon définissant un vieillissement prédéterminé, et le deuxième type de conduite est associé à un vieillissement prématuré de la batterie 1 en comparaison au troisième type de conduite. La sévérité des cycles peut être fonction par exemple de la température batterie, de la puissance RMS (RMS = moyenne) en roulage, le temps passé en roulage, etc., et l'évaluation des seuils ajustés peut se faire par boucle de régulation, cartographie ou encore par incrémentation (ou décrémentation) des températures seuils jusqu'à revenir dans la situation de référence (seuils sans ajustement).

Selon un deuxième mode de réalisation, l'étape d'ajustement E3 comporte une étape de détermination E3-2 d'un état de la batterie 1, notamment son âge ou son état de santé. Autrement dit, l'étape d'ajustement E3 d'au moins l'un des premier et deuxième seuils prend en compte ledit état déterminé. Par exemple, l'étape d'ajustement E3 comporte l'interrogation d'une table dont une entrée est l'état déterminé de la batterie 1, ladite table donnant en sortie un nouveau premier seuil à utiliser dans l'étape de refroidissement E1 et/ou un nouveau deuxième seuil à utiliser dans l'étape d'arrêt du refroidissement E2.

L'état de santé de la batterie 1, aussi appelé SOH (pour l'anglais « State Of Health »), est généralement disponible à partir du contrôleur de la batterie 1 comme par exemple le CAN (de l'anglais « Controller Area Network). L'utilisation de l'état de santé de la batterie 1 est facile à mettre en oeuvre dans le sens où elle utilise des cartographies prédéterminées. L'homme du métier est à même de déterminer ces cartographies de sorte que pour chaque valeur d'état de santé, ou une plage de valeurs d'état de santé, il soit associé un premier seuil à utiliser et/ou un deuxième seuil à utiliser. L'état de santé de la batterie est un indicateur du vieillissement de la batterie, mais c'est aussi indirectement un indicateur de l'augmentation de sa résistance interne et donc de son échauffement. Afin de prévenir les températures élevées dans la batterie, les seuils devront donc être baissés avec la diminution du SOH.

Concernant l'âge de la batterie 1, une durée de vie de la batterie 1 peut être divisée en plusieurs périodes, chaque période associée à un âge de la batterie 1 incluant une valeur de premier seuil à utiliser et/ou une valeur de deuxième seuil à utiliser. Par exemple, chaque période est relative à une année de fonctionnement de la batterie 1. Dans ce cas, les seuils peuvent être définis de la manière suivante :
- 1^{ere} année : premier seuil = 30°C et deuxième seuil = 17°C
- 2^{eme} année : premier seuil = 29°C et deuxième seuil = 16°C
- 3^{eme} année : premier seuil = 28°C et deuxième seuil = 15°C

Une telle prise en compte de l'âge ou de l'état de santé sont des solutions simples à mettre en oeuvre. Toutefois, la simple utilisation de l'âge présente l'inconvénient de ne pas prendre en compte le comportement réel du client, notamment le conducteur du véhicule automobile 3.

Dans tous les cas, le procédé comporte une étape de détermination E4 d'une perte de capacité réelle de la batterie 1 et l'étape d'ajustement d'au moins l'un des premier et deuxième seuils est fonction de ladite perte de capacité réelle de la batterie 1 déterminée. Autrement dit, l'étape d'ajustement E3-3 d'au moins l'un des premier et deuxième seuils prend en compte ladite perte de capacité réelle. Ceci permet de prendre en compte l'utilisation de la batterie pour agir sur les premier et/ou deuxième seuils, par exemple pour assurer une bonne durée de vie de la batterie 1. Ce même processus peut se faire en utilisant le SOH de la batterie (comparaison de l'évolution du SOH réel au SOH théorique « normale » de référence).

En outre, le procédé peut aussi comporter une étape de détermination E5 d'une perte de capacité théorique de la batterie 1 et l'étape d'ajustement E3-3 prend en compte ladite perte de capacité théorique déterminée. En fait, la perte de capacité théorique s'entend pour une batterie 1 par rapport à une utilisation normale de la batterie déterminée par le constructeur. Ainsi, il est, par exemple, possible de comparer la perte de capacité réelle déterminée avec la perte de capacité théorique déterminée de sorte à déterminer une « dérive » de l'utilisation dite « normale », par exemple du véhicule équipé de la batterie, avec l'utilisation réelle, par exemple du véhicule équipé de la batterie, afin d'adapter le premier seuil et/ou le deuxième seuil. Ceci est d'autant plus vrai lorsque la batterie 1 est associée une durée de vie garantie définie par des conditions théoriques d'utilisation de la batterie 1, dans ce cas l'étape d'ajustement E3-3 peut comporter une étape de comparaison des pertes de capacité théorique et réelle déterminées de sorte que l'ajustement d'au moins l'un des premier et deuxième seuils permette d'assurer la durée de vie garantie.

Selon une mise en oeuvre particulière, le procédé comporte un cycle au cours duquel il est réalisé une étape d'apprentissage E6 (figure 1) (ce cycle peut être une plage, ou période, temporelle,...), du comportement de la batterie 1 en fonction de son état de charge et de sa température.

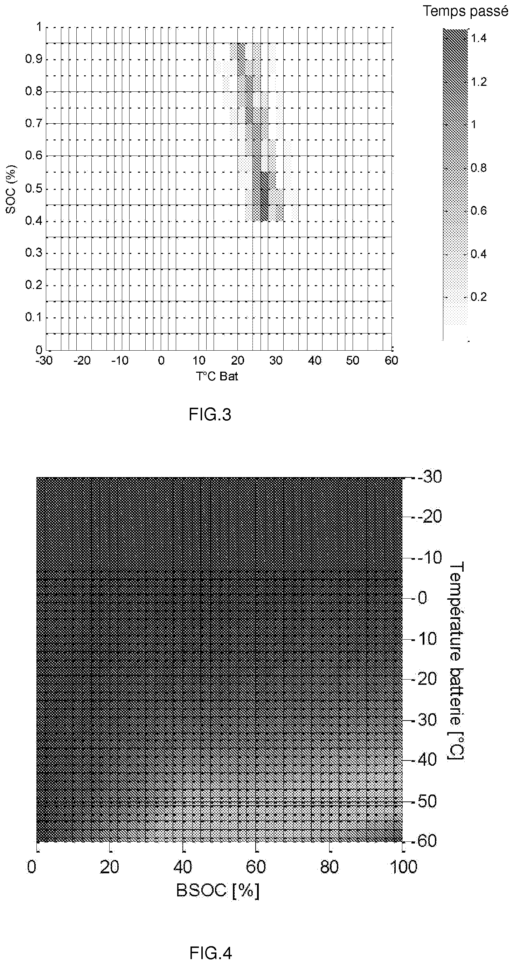

Selon un exemple particulier, cette étape d'apprentissage E6 comprend la construction d'un ensemble de paramètres, chaque paramètre comprenant une première information relative à un ou plusieurs états de charge, notamment une plage d'états de charge, une deuxième information relative à une ou plusieurs températures, notamment une plage de températures, et une troisième information temporelle, notamment un pourcentage, représentative du temps dans lequel la batterie 1 a fonctionné selon la première information et la deuxième information au cours de la plage, ou période, temporelle. La figure 3 illustre un tel ensemble construit se présentant sous la forme d'une matrice contenant par exemple le temps passé (en pourcentage) par plage d'états de charge (SOC en pourcentage) et par plage de températures (T°C Bat). Chaque case de la matrice illustrée à la figure 3 représentant un paramètre. Chaque paramètre est, de préférence, unique et son unicité est donnée par l'association de la première information et la deuxième information associées. Ces informations permettront de calculer la perte de capacité réelle de la batterie et ensuite de savoir recalculer les seuils de températures à adapter pour obtenir l'évolution de capacité voulue. Cette méthode plus complexe permet ainsi de calculer des seuils adaptés plus précis que les méthodes proposées précédemment.

La notion de plage temporelle donne une information sur une durée temporelle sans lien à d'autres plages, et la notion de période temporelle correspond à une plage qui est répétitive dans le temps.

De manière générale, à la fin de la plage, ou période, temporelle une perte de capacité réelle de la batterie peut être déterminée (étape E4) à partir des résultats de l'étape d'apprentissage E6.

Dans le cadre de l'exemple particulier de l'étape d'apprentissage (E6), à la fin de la plage, ou période, temporelle il est appliqué à chacune des troisièmes informations un coefficient de dégradation correspondant de sorte à évaluer la perte de capacité réelle de la batterie. Plus particulièrement, notamment pour la plage, ou période, temporelle associée au cycle, il est associé un ensemble de coefficients de dégradation correspondant chacun à un paramètre de l'ensemble de paramètre. La figure 4 illustre une réalisation particulière sous forme de matrice contenant pour chaque cas un coefficient de dégradation associé à une plage d'états de charge et à une plage de températures. La perte de capacité réelle de la batterie peut alors être évaluée en multipliant les deux matrices et en réalisant la somme de chaque troisième information multipliée à un coefficient de dégradation associé. A partir des informations obtenues (figures 3 et 4 et l'âge et/ou la résistance interne batterie et les kWh cyclés) une perte de capacité calendaire et une perte de capacité en cyclage sont calculées, ceci permet de calculer la capacité réelle de la batterie.

De manière générale, l'étape d'ajustement E3-3 d'au moins l'un des premier et deuxième seuils peut comprendre l'établissement d'un correctif à appliquer audit au moins un des premier et deuxième seuils en prenant en compte au moins la perte de capacité réelle déterminée de la batterie 1.

On comprend de ce qui a été dit ci-dessus que le correctif à appliquer peut aussi dépendre d'une comparaison entre la perte de capacité théorique déterminée et la perte de capacité réelle déterminée. En fait, à partir des matrices obtenues, on peut recréer les matrices requises pour rejoindre la courbe de référence de capacité à un âge donné, et l'écart entre ces matrices peut se traduire en delta de seuil de température de déclenchement et/ou arrêt du refroidissement.

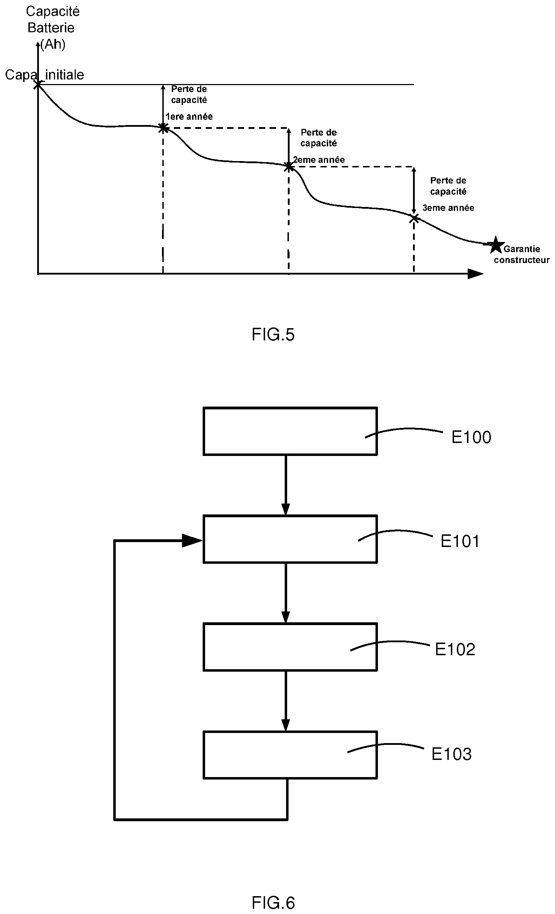

En fait, l'étape de détermination E5 de la perte de capacité théorique peut correspondre à établir à partir d'une courbe prédéterminée ladite perte correspondante. Une telle courbe peut être celle illustrée à la figure 5 qui donne l'évolution de la capacité de la batterie en Ah en fonction du temps en années (le cycle étant alors associé à une plage temporelle répétitive représentative d'une année). Cette courbe pré-établie peut l'être par exemple pour un véhicule donné, dans des conditions normales d'utilisation définies par le constructeur, par exemple à partir d'un banc d'essai.

De préférence, le processus est itératif tout au long de la durée de vie de la batterie 1 de sorte que chaque fin de cycle entraine l'ajustement de l'au moins un des premier et deuxième seuils pour le cycle suivant. Ceci permet de provoquer un réajustement à différentes étapes de la vie de la batterie espacées temporellement.

La figure 6 illustre une succession préférée du procédé de gestion dont le cycle se répète chaque année anniversaire de la mise en fonctionnement de la batterie 1. Dans une première phase E100, une initialisation est réalisée pour la première année de fonctionnement de la batterie 1 en déterminant un premier seuil à 28°C et un deuxième seuil à 15°C, ces deux valeurs étant prévues par le constructeur automobile.

Dans une deuxième phase E101, un client utilise son véhicule tout au long de la première année au cours de laquelle l'étape d'apprentissage E6 décrite ci-avant est mise en oeuvre.

A la fin de la première année, c'est-à-dire au moment où un nouveau cycle va être initié, une troisième phase de bilan E102 est mise en oeuvre. Ce bilan comprend :
- l'évaluation de la perte de capacité réelle de la batterie au cours de l'année écoulée,
- la comparaison de la perte de capacité réelle avec une perte de capacité théorique pré-établie pour une année similaire à celle écoulée,
- l'évaluation d'un correctif à appliquer et la détermination de deux nouveaux premier et deuxième seuils à partir de ceux courants.

Consécutivement à la phase de bilan E102, il est appliqué les nouveaux premier et deuxième seuils E103 dans le cadre d'une nouvelle année, le procédé reboucle alors à la deuxième phase E101 de sorte à réaliser un nouvel apprentissage de la nouvelle année en cours.

Dans la succession préférée du procédé de gestion ci-dessus, le processus est simplifié en ne faisant qu'un recalage des seuils à la fin de chaque année mais cela pourrait se faire par intervalles réguliers (ou autre). En cas de calcul régulier, il est possible de prendre en compte des matrices de référence dépendant des saisons (ou de la température extérieure moyenne depuis le dernier changement d'intervalle, la mise à zéro de l'apprentissage, c'est-à-dire l'étape E6, ne se faisant par exemple qu'aux anniversaires) pour ne pas entraîner de mauvais recalages de seuils. En effet, cela permet ainsi de ne pas avoir d'incohérence entre la période de collecte des données de la matrice temporelle et celle de référence.

De manière générale, il est possible d'augmenter ou de baisser le premier seuil et/ou le deuxième seuil, mais bien entendu dans certains cas, des limites existent, notamment pour la limite inférieure en fonction des performances de la batterie à froid.

Concernant la manière de calculer la correction de température, c'est-à-dire l'ajustement du premier et/ou deuxième seuils, plusieurs méthodes peuvent être utilisées : résolution numérique, dichotomie, PID (pour correcteur ou régulateur Proportionnel Intégral Dérivé), etc.

Dans le procédé de gestion, il a été considéré que la dégradation cyclage du client était conforme à la dégradation référence de garantie de la batterie 1. Néanmoins, on peut affiner le calcul de la température cible en considérant comme dégradation référence de garantie non pas directement le calcul issu de la somme de la multiplication des matrices (dégradation calendaire) décrite ci-avant mais la dégradation totale référence de garantie prenant en compte séparément la dégradation cyclage et la dégradation calendaire.

Par « dégradation cyclage », on entend la perte par cyclage car elles se calculent différemment des pertes 'calendaires'. Les pertes calendaires existent même si le client n'utilise pas sa batterie, c'est un mode de dégradation donné. Si le client se sert de sa batterie alors il faut ajouter aux pertes calendaires les pertes par cyclage.

Le procédé tel que décrit est très avantageux dans le sens où, suivant le comportement client, les seuils de refroidissement sont ajustés tout en remplissant des objectifs de garantie en termes de capacité batterie. Ceci permet, par ailleurs, d'optimiser le coût du refroidissement et donc d'optimiser l'autonomie.

Bien entendu, l'invention est aussi relative à un véhicule automobile 3 (figure 2) comprenant une batterie 1, au moins un capteur ou observateur de température 6 configuré de sorte à mesurer une valeur représentative de la température de la batterie 1, un système de refroidissement 2 de la batterie 1 et un système de calcul 7 relié au capteur de température 6, au système de refroidissement 2 et comprenant les moyens logiciels et/ou matériels de mise en oeuvre du procédé de gestion tel que décrit. En particulier, les moyens logiciels et/ou matériel peuvent comporter un élément pour chaque étape du procédé de gestion, chaque élément étant alors configuré de sorte à réaliser l'étape à laquelle il est associé.

Par ailleurs, un support d'enregistrement de données lisible par un calculateur, sur lequel est enregistré un programme informatique peut comprendre des moyens de codes de programme informatique de mise en oeuvre d'un procédé de gestion de la batterie (ou de ses étapes) tel que décrit ci-dessus.

En outre, un programme informatique peut comprendre un moyen de codes de programme informatique adapté à la réalisation du procédé de gestion de la batterie (ou de ses étapes) tel que décrit ci-dessus, notamment lorsque le programme est exécuté par un calculateur.

Le support d'enregistrement et/ou le programme informatique peuvent faire partie du véhicule tel que décrit.

Selon une alternative, il peut être connu, notamment à partir du CAN, l'état de santé réel de la batterie pour un instant donné de la vie de la batterie, et l'état de santé théorique issu de données constructeur pour le même instant donné peut être connu à partir d'une cartographie prédéterminée. Il est possible de transformer ces états de santé en perte de capacité réelle et perte de capacité théorique afin de les utiliser dans le cadre de l'ajustement tel que décrit, et vice et versa la perte de capacité peut être traduite en SOH.

## Revendications

1. Procédé de gestion d'une batterie (1), ledit procédé comportant :
- une étape de refroidissement (E1) de la batterie (1) lorsqu'une donnée représentative de la température de la batterie (1) dépasse un premier seuil,
- une étape d'arrêt du refroidissement (E2) de la batterie (1) lorsque la donnée représentative de la température de la batterie (1) passe en dessous d'un deuxième seuil, notamment inférieur au premier seuil,
- une étape d'ajustement (E3) d'au moins l'un des premier et deuxième seuils,
**caractérisé en ce qu'**il comporte une étape de détermination (E4) d'une perte de capacité réelle de la batterie (1), l'étape d'ajustement (E3, E3-3) d'au moins l'un des premier et deuxième seuils étant fonction de ladite perte de capacité réelle de la batterie

2. Procédé selon la revendication 1 de gestion d'une batterie (1) disposée dans un véhicule automobile, **caractérisé en ce que** l'étape d'ajustement (E3) d'au moins l'un des premier et deuxième seuils comporte une étape de détermination (E3-1) d'un comportement de conduite choisi parmi un premier type de conduite et un deuxième type de conduite sollicitant plus la batterie (1) que le premier type de conduite, notamment par comparaison d'au moins un seuil de conduite prédéterminé à au moins une information de conduite.

3. Procédé selon la revendication 2, **caractérisé en ce que** le comportement de conduite déterminé étant du deuxième type de conduite, le premier seuil et/ou le deuxième seuil sont abaissés par l'étape d'ajustement (E3).

4. Procédé selon la revendication 2, **caractérisé en ce que** le comportement de conduite déterminé étant du premier type de conduite, les premier et/ou deuxième seuils sont ajustés à la hausse par l'étape d'ajustement (E3) de sorte à diminuer la dépense d'énergie du véhicule.

5. Procédé selon l'une quelconque des revendications précédentes, **caractérisé en ce que** l'étape d'ajustement (E3) d'au moins l'un des premier et deuxième seuils comporte une étape de détermination (E3-2) d'un état de la batterie (1), notamment son âge ou son état de santé.

6. Procédé selon la revendication précédente, **caractérisé en ce que** l'étape d'ajustement (E3) comporte l'interrogation d'une table dont une entrée est l'état déterminé de la batterie (1), ladite table donnant en sortie un nouveau premier seuil à utiliser dans l'étape de refroidissement (E1) et/ou un nouveau deuxième seuil à utiliser dans l'étape d'arrêt du refroidissement (E2).

7. Procédé selon la revendication 1, **caractérisé en ce qu'**il comporte une étape de détermination (E5) d'une perte de capacité théorique de la batterie (1), l'étape d'ajustement d'au moins l'un des premier et deuxième seuils prenant en compte ladite perte de capacité théorique.

8. Procédé selon les revendications 1 et 7, **caractérisé en ce que** la batterie ayant une durée de vie garantie déterminée par des conditions théoriques d'utilisation de la batterie (1), l'étape d'ajustement (E3-3) comporte une étape de comparaison de la perte de capacité réelle déterminée et de la perte de capacité théorique déterminée de sorte que l'ajustement d'au moins l'un des premier et deuxième seuils permette d'assurer la durée de vie garantie.

9. Procédé selon l'une des revendications 1 à 8, **caractérisé en ce qu'**il comporte un cycle au cours duquel :
- il est réalisé une étape d'apprentissage (E6), au cours d'une plage temporelle associée au cycle, du comportement de la batterie en fonction de son état de charge et de sa température,
- à la fin de la plage temporelle une perte de capacité réelle de la batterie est déterminée (E4) à partir des résultats de l'étape d'apprentissage (6),
- l'étape d'ajustement (E3-3) d'au moins l'un des premier et deuxième seuils comprend l'établissement d'un correctif à appliquer audit d'au moins un des premier et deuxième seuils en prenant en compte au moins la perte de capacité réelle déterminée de la batterie (1).

10. Procédé selon les revendications 7 et 9, **caractérisé en ce que** le correctif à appliquer dépend d'une comparaison entre la perte de capacité théorique déterminée et la perte de capacité réelle déterminée.

11. Procédé selon l'une des revendications 9 ou 10, **caractérisé en ce que** le processus est itératif tout au long de la durée de vie de la batterie (1) de sorte que chaque fin de cycle entraine l'ajustement de l'au moins un des premier et deuxième seuils pour le cycle suivant.

12. Procédé selon l'une des revendications 9 à 11, **caractérisé en ce que** l'étape d'apprentissage (E6) comprend la construction d'un ensemble de paramètres, chaque paramètre comprenant une première information relative à un ou plusieurs états de charge, notamment une plage d'états de charge, une deuxième information relative à une ou plusieurs températures, notamment une plage de températures, et une troisième information temporelle, notamment un pourcentage, représentative du temps dans lequel la batterie a fonctionné selon la première information et la deuxième information au cours de la plage temporelle, et **en ce qu'**à la fin de la plage temporelle il est appliqué à chacune des troisièmes informations un coefficient de dégradation correspondant de sorte à déterminer la perte de capacité réelle de la batterie.

13. Véhicule automobile (3) comprenant une batterie (1), au moins un capteur ou observateur de température (6) configuré de sorte à mesurer une valeur représentative de la température de la batterie, un système de refroidissement (2) de la batterie (1) et un système de calcul (7) relié au capteur de température (6), au système de refroidissement (2) et comprenant les moyens logiciels et/ou matériels de mise en oeuvre du procédé de gestion selon l'une quelconque des revendications précédentes.

## Patentansprüche

1. Verfahren zur Verwaltung einer Batterie (1), wobei das Verfahren aufweist:
- einen Schritt des Kühlens (E1) der Batterie (1), wenn ein für die Temperatur der Batterie (1) repräsentativer Datenwert eine erste Schwelle überschreitet,
- einen Schritt des Beendens der Kühlung (E2) der Batterie (1), wenn der für die Temperatur der Batterie (1) repräsentative Datenwert unter eine zweite Schwelle geht, die insbesondere niedriger ist als die erste Schwelle,
- einen Schritt der Anpassung (E3) mindestens einer der ersten und zweiten Schwellen,
**dadurch gekennzeichnet, dass** es einen Schritt der Bestimmung (E4) eines realen Kapazitätsverlusts der Batterie (1) aufweist, wobei der Schritt der Anpassung (E3, E3-3) mindestens einer der ersten und zweiten Schwellen vom realen Kapazitätsverlust der Batterie abhängt.

2. Verfahren nach Anspruch 1 zur Verwaltung einer in einem Kraftfahrzeug angeordneten Batterie (1), **dadurch gekennzeichnet, dass** der Schritt der Anpassung (E3) mindestens einer der ersten und zweiten Schwellen einen Schritt der Bestimmung (E3-1) eines Fahrverhaltens aufweist, das unter einer ersten und einer zweiten Fahrweise ausgewählt wird, die die Batterie (1) stärker beansprucht als die erste Fahrweise, insbesondere durch Vergleich mindestens einer vorbestimmten Fahrschwelle mit mindestens einer Fahrinformation.

3. Verfahren nach Anspruch 2, **dadurch gekennzeichnet, dass**, wenn das bestimmte Fahrverhalten die zweite Fahrweise ist, die erste Schwelle und/oder die zweite Schwelle durch den Anpassungsschritt (E3) gesenkt werden.

4. Verfahren nach Anspruch 2, **dadurch gekennzeichnet, dass**, wenn das bestimmte Fahrverhalten die erste Fahrweise ist, die ersten und/oder zweiten Schwellen durch den Anpassungsschritt (E3) an die Erhöhung angepasst werden, um die Energiekosten des Fahrzeugs zu verringern.

5. Verfahren nach einem der vorhergehenden Ansprüche, **dadurch gekennzeichnet, dass** der Schritt der Anpassung (E3) mindestens einer der ersten und zweiten Schwellen einen Schritt der Bestimmung (E3-2) eines Zustands der Batterie (1) aufweist, insbesondere ihres Alters oder ihres Gesundheitszustands.

6. Verfahren nach dem vorhergehenden Anspruch, **dadurch gekennzeichnet, dass** der Anpassungsschritt (E3) die Abfrage einer Tabelle aufweist, von der ein Eintrag der bestimmte Zustand der Batterie (1) ist, wobei die Tabelle am Ausgang eine neue erste Schwelle, die im Kühlungsschritt (E1) zu verwenden ist, und/oder eine neue zweite Schwelle ergibt, die im Schritt des Beendens der Kühlung (E2) zu verwenden ist.

7. Verfahren nach Anspruch 1, **dadurch gekennzeichnet, dass** es einen Schritt der Bestimmung (E5) eines theoretischen Kapazitätsverlusts der Batterie (1) aufweist, wobei der Schritt der Anpassung mindestens einer der ersten und zweiten Schwellen den theoretischen Kapazitätsverlust berücksichtigt.

8. Verfahren nach den Ansprüchen 1 und 7, **dadurch gekennzeichnet, dass**, wenn die Batterie eine garantierte Lebensdauer hat, die von theoretischen Benutzungsbedingungen der Batterie (1) bestimmt wird, der Anpassungsschritt (E3-3) einen Schritt des Vergleichs des bestimmten realen Kapazitätsverlusts und des bestimmten theoretischen Kapazitätsverlusts aufweist, damit die Anpassung mindestens einer der ersten und zweiten Schwellen es ermöglicht, die garantierte Lebensdauer zu gewährleisten.

9. Verfahren nach einem der Ansprüche 1 bis 8, **dadurch gekennzeichnet, dass** es einen Zyklus aufweist, während dessen:
- ein Schritt des Lernens (E6), während eines dem Zyklus zugeordneten Zeitbereichs, des Verhaltens der Batterie abhängig von ihrem Ladezustand und ihrer Temperatur durchgeführt wird,
- am Ende des Zeitbereichs ein realer Kapazitätsverlust der Batterie (E4) ausgehend von den Ergebnissen des Lernschritts (6) bestimmt wird,
- der Schritt der Anpassung (E3-3) mindestens einer der ersten und zweiten Schwellen die Erstellung eines Korrektivs enthält, das unter Berücksichtigung mindestens des bestimmten realen Kapazitätsverlusts der Batterie (1) an die mindestens eine der ersten und zweiten Schwellen anzuwenden ist.

10. Verfahren nach den Ansprüchen 7 und 9, **dadurch gekennzeichnet, dass** das anzuwendende Korrektiv von einem Vergleich zwischen dem bestimmten theoretischen Kapazitätsverlust und dem bestimmten realen Kapazitätsverlust abhängt.

11. Verfahren nach einem der Ansprüche 9 oder 10, **dadurch gekennzeichnet, dass** der Prozess während der ganzen Lebensdauer der Batterie (1) iterativ ist, so dass jedes Zyklusende die Anpassung der mindestens einen der ersten und zweiten Schwellen für den folgenden Zyklus nach sich zieht.

12. Verfahren nach einem der Ansprüche 9 bis 11, **dadurch gekennzeichnet, dass** der Lernschritt (E6) den Aufbau einer Einheit von Parametern enthält, wobei jeder Parameter eine erste Information bezüglich eines oder mehrerer Lastzustände, insbesondere eines Bereichs von Lastzuständen, eine zweite Information bezüglich einer oder mehrerer Temperaturen, insbesondere eines Temperaturbereichs, und eine dritte zeitliche Information enthält, insbesondere ein Prozentsatz, der für die Zeit repräsentativ ist, in der die Batterie gemäß der ersten Information und der zweiten Information während des Zeitbereichs gearbeitet hat, und dass am Ende des Zeitbereichs an jede der dritten Informationen ein entsprechender Verschlechterungskoeffizient angewendet wird, um den realen Kapazitätsverlust der Batterie zu bestimmen.

13. Kraftfahrzeug (3), das eine Batterie (1), mindestens einen Temperatursensor oder -beobachter (6), der so konfiguriert ist, dass er einen für die Temperatur der Batterie repräsentativen Wert misst, ein Kühlsystem (2) der Batterie (1) und ein Rechensystem (7) enthält, das mit dem Temperatursensor (6), dem Kühlsystem (2) verbunden ist und die Software- und/oder Hardware-Einrichtungen zur Durchführung des Verwaltungsverfahrens nach einem der vorhergehenden Ansprüche enthält.

## Claims

1. Method for managing a battery (1), said method including:
- a step of cooling (E1) of the battery (1) when a data item representative of the temperature of the battery (1) exceeds a first threshold,
- a step of stopping the cooling (E2) of the battery (1) when the data item representative of the temperature of the battery (1) drops below a second threshold, which in particular is lower than the first threshold,
- a step of adjustment (E3) of at least one of the first and second thresholds,
**characterized in that** it includes a step of determination (E4) of a loss of real capacity of the battery (1), the step of adjustment (E3, E3-3) of at least one of the first and second thresholds being dependent on said loss of real capacity of the battery.

2. Method according to Claim 1 for managing a battery (1) disposed in a motor vehicle, **characterized in that** the step of adjustment (E3) of at least one of the first and second thresholds includes a step of determination (E3-1) of a driving behavior selected from a first driving type and a second driving type, which engages the battery (1) more than the first driving type, in particular by comparison of at least one predetermined driving threshold with at least one driving information item.

3. Method according to Claim 2, **characterized in that** when the determined driving behavior is of the second driving type, the first threshold and/or the second threshold are/is lowered by the step of adjustment (E3).

4. Method according to Claim 2, **characterized in that** when the determined driving behavior is of the first driving type, the first and/or second thresholds are/is adjusted upwardly by the step of adjustment (E3) so as to reduce the energy expenditure of the vehicle.

5. Method according to any one of the preceding claims, **characterized in that** the step of adjustment (E3) of at least one of the first and second thresholds includes a step of determination (E3-2) of a state of the battery (1), in particular the age thereof or the state of health thereof.

6. Method according to the preceding claim, **characterized in that** the step of adjustment (E3) includes the interrogation of a table of which an input is the determined state of the battery (1), said table providing at the output a new first threshold to be used in the step of cooling (E1) and/or a new second threshold to be used in the step of stopping the cooling (E2).

7. Method according to Claim 1, **characterized in that** it includes a step of determination (E5) of a loss of theoretical capacity of the battery (1), the step of adjustment of at least one of the first and second thresholds taking into consideration said loss of theoretical capacity.

8. Method according to Claims 1 and 7, **characterized in that**, the battery having a guaranteed service life determined by theoretical conditions of use of the battery (1), the step of adjustment (E3-3) includes a step of comparison of the determined loss of real capacity and of the determined loss of theoretical capacity, such that the adjustment of at least one of the first and second thresholds makes it possible to ensure the guaranteed service life.

9. Method according to one of Claims 1 to 8, **characterized in that** said method includes a cycle, during which:
- a step of learning (E6) of the behavior of the battery according to the state of charge and temperature thereof is performed, during a time range associated with the cycle,
- at the end of the time range a loss of real capacity of the battery is determined (E4) on the basis of the results of the step of learning (6),
- the step of adjustment (E3-3) of at least one of the first and second thresholds includes the establishment of a correction to be applied to said at least one of the first and second thresholds taking into consideration at least the determined loss of real capacity of the battery (1).

10. Method according to Claims 7 and 9, **characterized in that** the correction to be applied is dependent on a comparison between the determined loss of theoretical capacity and the determined loss of real capacity.

11. Method according to either of Claims 9 and 10, **characterized in that** the process is repeated throughout the service life of the battery (1), such that each cycle end induces the adjustment of at least one of the first and second thresholds for the following cycle.

12. Method according to one of Claims 9 to 11, **characterized in that** the step of learning (E6) comprises the construction of a set of parameters, each parameter comprising a first information item relating to one or more states of charge, in particular a state of charge range, a second information item relating to one or more temperatures, in particular a temperature range, and a third time information item, in particular a percentage, representative of the time during which the battery has operated in accordance with the first information item and the second information item during the time range, and **in that** at the end of the time range a corresponding coefficient of degradation is applied to each of the third information items so as to determine the loss of real capacity of the battery.

13. Motor vehicle (3) comprising a battery (1), at least one temperature sensor or monitor (6) configured so as to measure a value representative of the temperature of the battery, a system (2) for cooling the battery (1), and a calculation system (7) connected to the temperature sensor (6) and to the cooling system (2) and comprising software and/or hardware means for implementing the management method according to any one of the preceding claims.
